# EUROPEAN PATENT APPLICATION

(11) **EP 2 468 471 A1**
(43) Date of publication of application: **27.06.2012**
(21) Application number: 10460055.6
(22) Date of filing: 27.12.2010
(51) Int. Cl.: B29C 33/44, B29C 70/46, B29C 70/54, B63B 5/24, B29D 99/00

(54) **A method of manufacture of a part of a boat by the substrate moulding, a fastener and a countermould used in this method, a part of a boat manufactured with this method**

(71) Applicant: "Ostroda Yacht" Sp. z o.o., 140100 Ostroda (PL)
(72) Inventor: Gwintowt, Cezariusz, 14-100 Ostroda (PL); Lewandowki, Arkadiusz, 14-100 Ostroda (PL)

(57) **Abstract**

A method of manufacture of a part of a floating vessel, e.g. a part of a boat, by the substrate moulding is proposed, where this part of a boat is formed and cured between a lower die - a mould (6) and an upper die - a countermould (3), so that at least one layer (5) of the substrate is fastened to the countermould with at least one fastener. This layer is made for example from a fibre glass fabric. The fastener comprises two main parts: a plate (1) and a bolt (2). The bolt is screwed on its first end (2c) into the threaded opening (1a) in the plate placed between the layers (5a, 5b) of the substrate. The bolt is put through the orifices (4a) in the countermould and fastened to it on other side with a washer (7) and a nut (8), thus securing the layer of the substrate to the countermould. The bolt, washer and nut are covered with a sealant. After the process of forming and curing of the part of a boat is completed, the countermould is removed from the mould together with the part of a boat which remains fastened to the countermould, and moved to the transporting trolley. There the part of a boat is released from the countermould by removing the bolts from the countermould and from the threaded openings in the plates. Flat plates are used at relatively flat areas of the countermould, while bent plates are applied in curved regions. In latter case the plate is placed with concave surface facing convex region of the countermould, or it is placed with convex surface facing concave region of the countermould. Preferably two opposite end sections (1c) of flat plate are bent from the plane of flat central part (1b) of the plate and make an angle towards this plane between 120 degrees and 175 degrees, advantageously 170 degrees. The plate submerged in the hull of a boat may then be used to fix the pieces of equipment like a fuel tank (14).

## Description

The invention refers to a method of manufacture of objects characterised by relatively big dimensions by the substrate moulding. The invention refers also to a fastener and a countermould used in this method, and to the products where this method can be used, like a part of a floating vessel and a boat.

British patent document GB 961053 A (Lonza AG, 17.06.1964) discloses a method of extrusion thermo-moulding of big elements like the boats. In this process a sheet of thermoplastic laminate is formed between lower male die (mould) and upper female die (countermould), both closed in one covered casing. This process requires large margins of the substrate sheet to allow material to be drawn inwardly as it is deformed during moulding. These margins enable also removing the product from the press. Although the product is secured from uncontrolled demoulding from the upper female die, being hold on lugs supporting these margins, this invention does not solve the problem of safe and easy removing the product from forming device. Besides, requirement of large margins means considerable waste of expensive substrate material.

Another British patent document GB 973349 A (Fairey Marine Ltd., 21.10.1964) discloses a method of forming a boat on single mould consisting of two or more separable pieces. The invention is applicable to a hot moulding process, using timber or other laminate material coated or impregnated with thermosetting synthetic resin, or to a process using cold-curing resins reinforced with glass fibre. The mould pieces may be provided with channels to receive stringers, frames etc. to which the hull skin is to be attached which may be cut away so that a newly moulded hull may be lifted vertically of the mould. This solution has many disadvantages. Firstly, the counermould cannot be used, because the lifting elements have to protrude from the mould. Secondly, in forming of the fibre-reinforced resin laminate, the interior of the boat has to be finished additionally when the lifting elements are removed. This may weaken the reinforcement, because some parts of the fibre glass may be removed from the interior of the boat.

Chinese patent document CN 1110657 A (Guo X., 25.10.1995) discloses a method for manufacturing sandwich glass fibre-reinforced plastic hull suitable for small or middle ship or boat. According to proposed method, to make the hull with higher strength, the glass fibre-reinforced plastic material consisting of two fibre layers separated with filling component is applied onto the mould. External layers are maintained apart one from another by struts with end plates fixed in these layers. Although these struts contribute to reinforcement of the hull, they are not used to facilitate the moulding procedure.

In Japanese patent application JP 2002331988 A (Hitachi Shipbuilding Eng. Co., 19.11.2002) a T-shaped or H-shaped metal rail fully covered with a laminated sheet formed out of fiber reinforced plastic, mounted on a shell of the hull is proposed. Although this metallic element is covered by plastic layer, it is not manufactured together with the hull but it is fastened to the hull produced separately. Consequently, strength of connection between this element and the hull depends of how this connection is made.

All known methods of the substrate moulding are subject to considerable risk of the product uncontrolled demoulding. Usually the countermould is separated from the mould by lifting it high above the mould. If the product is not secured to the countermould, it may either demould from the countermould and rest on the mould, or it may suddenly demould when lifted together with the countermould. In former case the problem of releasing and lifting the product from the mould appears. In latter case the product may unexpectedly fall on the mould or on the floor from considerable height and may be damaged or destroyed.

This invention attempts to solve a technical problem of preventing the product from uncontrolled demoulding, thus securing the product from falling down from the countermould and minimising the risk of the product damage.

According to the invention, a method of manufacture of a part of a floating vessel, e.g. a part of a boat, by the substrate moulding is proposed, where this part of a boat is formed and cured between a mould and a countermould so that at least one layer of the substrate is fastened to the countermould with at least one fastener. This fastener comprises two main parts: a plate and a bolt. The bolt is screwed on its first end into the threaded opening in the plate, which shall be placed between the layers of the substrate. The bolt shall be fastened to the countermould, thus securing the layer of the substrate to the countermould. This layer is made for example from a fibre glass fabric.

More precisely, according to claimed method at least one first layer of the substrate is applied on the working surface of the mould and at least one second layer of the substrate is applied on the working surface of the countermould, which shall be turned upside down to enable application of the substrate on its surface. Both layers may contain fibre glass reinforced fabric. Then at least one plate of the fastener is placed on said second layer of the substrate in carefully selected place so that the threaded opening in the plate is facing respective orifice in the countermould. Then the fastening bolts are screwed on their first ends, through the orifices in the countermould, into the threaded openings in the plates. Now the washers, preferably the spring washers, are put on the second ends of the bolts, and the nuts are screwed on threaded parts of the bolts to stabilize the substrate upon the countermould. Usually three fasteners are sufficient to secure the substrate on the countermould. Finally, the second ends of the bolts together with the washers and the nuts are sealed, preferably with a sealing paste or a sealing tape, to prevent from leakage of liquid components of the substrate, and from the air penetration into the space closed between the mould and the countermould. When these operations are completed, the countermould is turned back to its working position and placed on the mould, and the part of a boat is formed and cured.

The method allows the part of a boat to be formed and cured in decreased pressure and increased temperature. After the process of forming and curing of the part of a boat is completed, the countermould is removed from the mould together with the part of a boat which remains fastened to the countermould, and moved to the transporting trolley. There the part of a boat is released from the countermould by removing the bolts from the countermould and from the threaded openings in the plates.

In this method the plate may be flat, but it may also be bent. Flat plates are used at relatively flat areas of the countermould, while bent plates are applied in curved regions. In latter case the plate is placed with concave surface facing convex region of the countermould, or it is placed with convex surface facing concave region of the countermould.

With this method relatively big elements may be manufactured, like a hull of a boat or a part thereof, a deck or a part thereof, a bulkhead or a part thereof, a bow or a part thereof, a stem or a part thereof, or any other part that can be manufactured by moulding.

Described method requires use of a fastener. This fastener comprises a plate provided with a threaded opening and a bolt provided on its first end with a thread fitting said threaded opening in the plate. With a tool applied on the second end of the bolt the latter is screwed into the plate of the fastener, or unscrewed from the plate when the product is demoulded from the countermould. The cross-section of the second end of the bolt is triangular or square, or hexagonal, or elliptical, or circular.

Alternatively but not exclusively, the bolt of the fastener is provided near to its second end with a hole crosswise to the axis of the bolt, for inserting of the levering rod, or the second end of the bolt is provided with two recesses shaped on opposite sides of the bolt and crosswise to the axis of the bolt for applying of the levering tool. The second end of the bolt may then be both shaped externally, e.g. may have square cross-section, and additionally be provided with the hole or the recesses. This makes easier to manipulate the bolt with various tools in case of complicated geometry of the countermould.

The plate of the fastener may be flat or bent, e.g. it may be arcuated. Preferably two opposite end sections of flat plate are bent from the plane of flat central part of the plate and make an angle towards this plane between 120 degrees and 175 degrees, advantageously 170 degrees. The bent plate shall be used in non-planar regions of the countermould surface. Bent plate fits better the countermould than the flat one and it is more stable during moulding and afterwards, in particular when a piece of equipment of the boat is secured to this plate.

If in certain region the surface of the countermould is concave, the bolt is screwed into the convex surface of the plate. On the contrary if the countermould surface is convex, the bolt is screwed into the concave surface of the plate.

To be sufficiently strong and corrosion resistant, the bolt is made from acid resistant steel and the plate is made from aluminium sheet of thickness from 3 mm to 6 mm, advantageously 4 mm. Alternatively the plate is made from acid resistant steel sheet of thickness from 2 mm to 4 mm, advantageously 3 mm. In special applications the plate may be thinner or thicker.

It is recommended that the threaded opening in the plate of the fastener has a diameter between 6 mm (M6) and 16 mm (M16), advantageously 10 mm (M10) and the external diameter of the bolt is also comprised in a range from 6 mm (M6) to 16 mm (M16), advantageously 10 mm (M10). The length of the bolt is comprised in a range from 50 mm to 120 mm, advantageously 80 mm, and the bolt is threaded on half of its length. As was said hereinbefore, the bolt must fit the plate, so the diameter of the threaded opening in the plate and that of the threaded part of the bolt have to be equal.

A countermould used in claimed method has required number of orifices, or it is provided with required number - at least one - of seats for the bolts of the fasteners. This seat has a cylindrical port adjusted with radial clearance to the diameter of the bolt of the fastener.

A part of a boat made with use of described method contains at least one plate of the fastener. This plate is closed between at least two layers of laminate. Usually this part of a boat, for example the hull, contains three plates applied in different regions of the product. These plates may now be used to secure various pieces of equipment mounted in the boat comprising at least one part manufactured according to claimed method. In preferred embodiment the boat contains a fuel tank, fastened to at least one plate of the fastener.

Preferred embodiments of the fastener and of its use in different parts of a boat, and a boat according to the invention are schematically shown on the drawing, where:

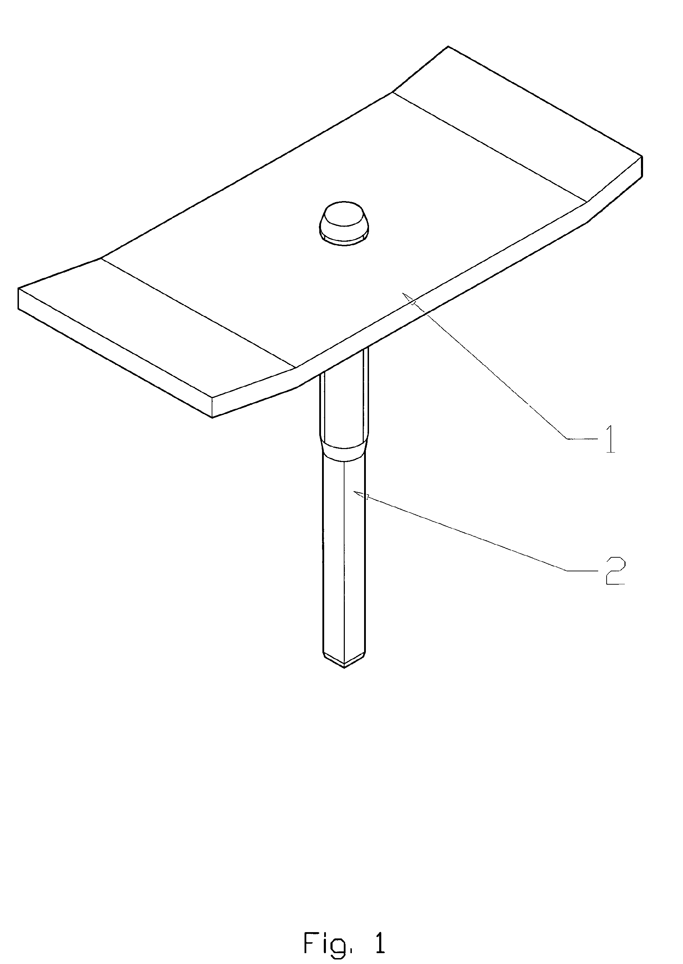

Fig. 1 shows first embodiment of the fastener in perspective view,

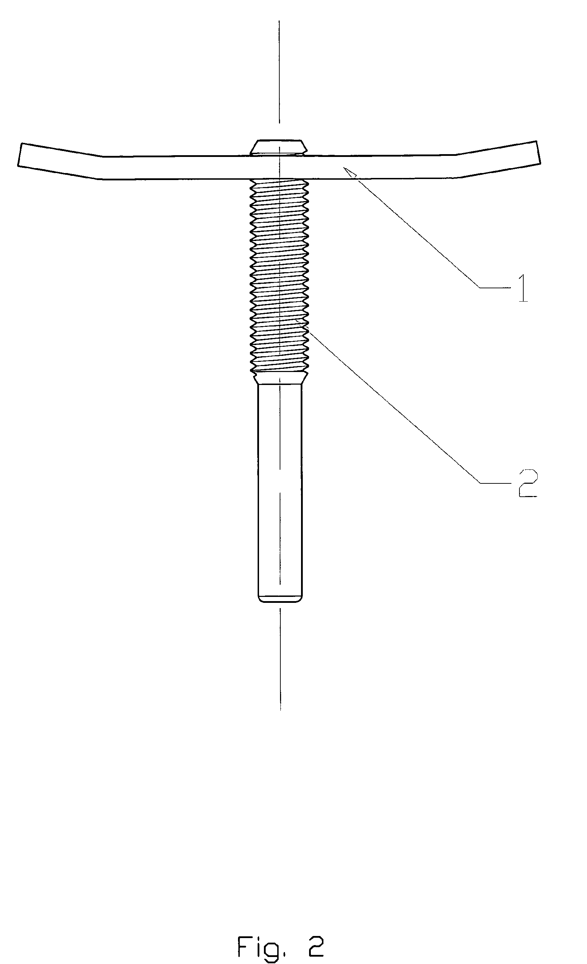

Fig. 2 illustrates first embodiment of the fastener in side view,

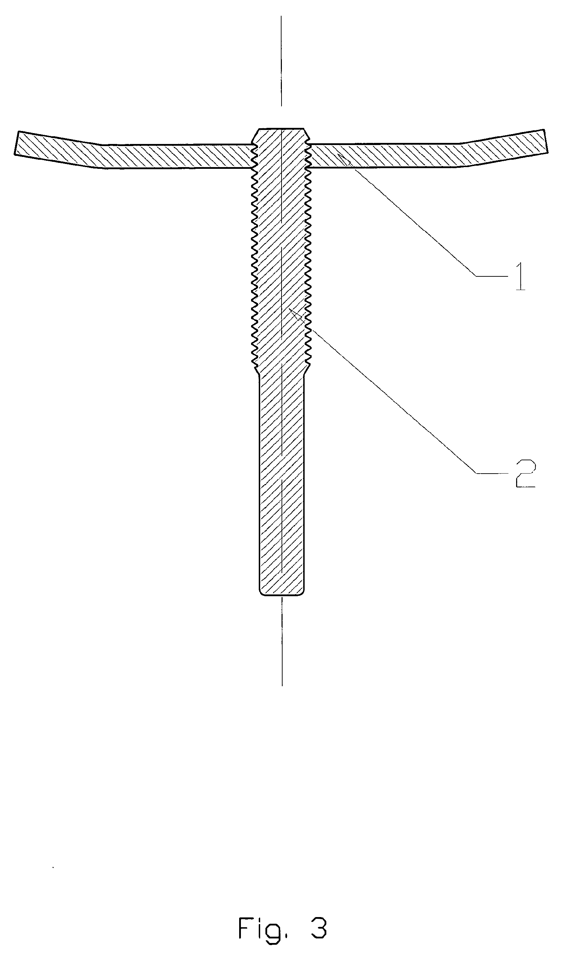

Fig. 3 shows longitudinal cross-section of first embodiment of the fastener,

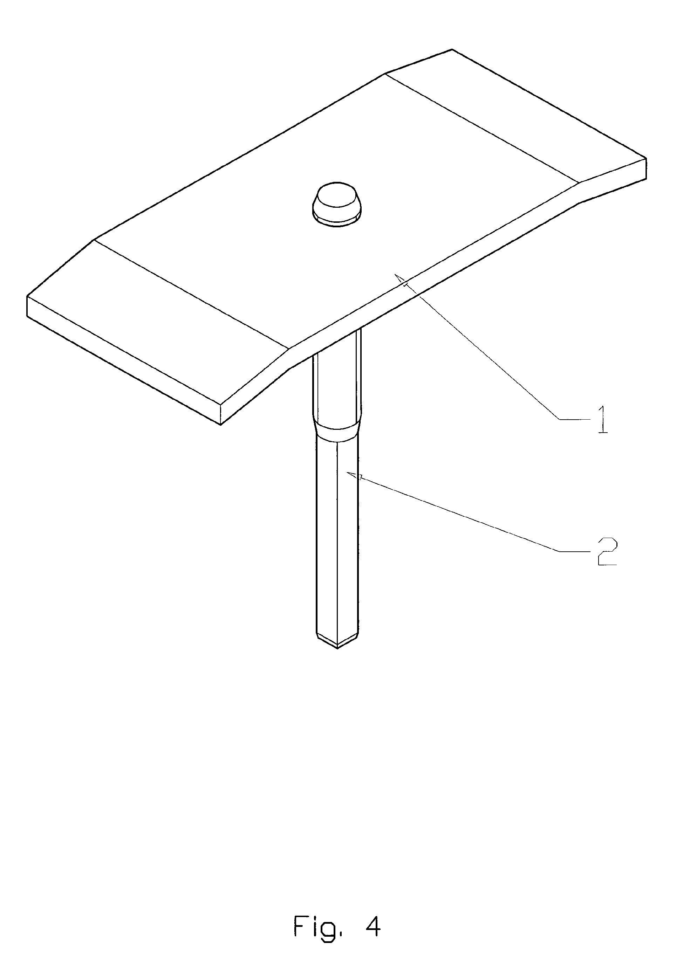

Fig. 4 shows second embodiment of the fastener in perspective view,

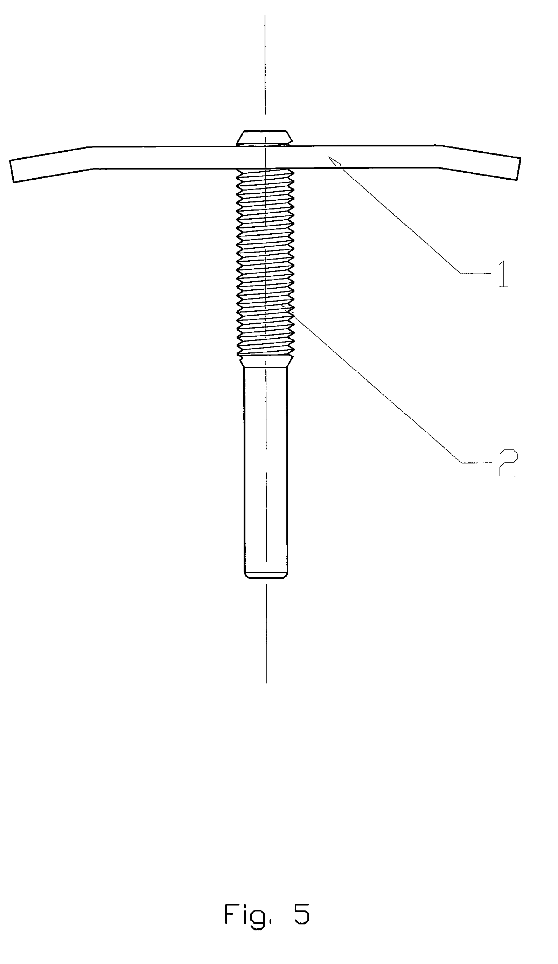

Fig. 5 illustrates second embodiment of the fastener in side view,

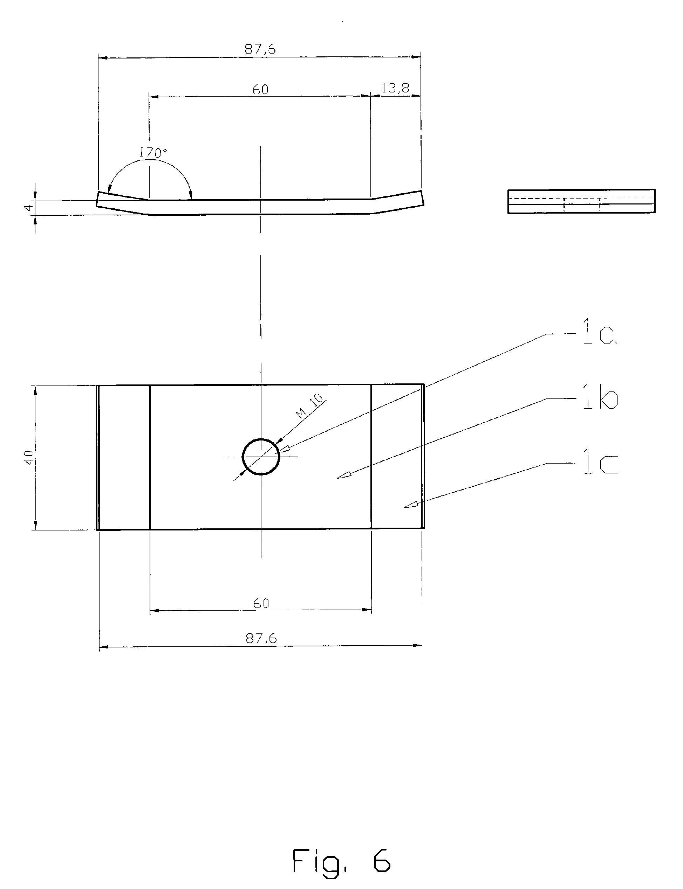

Fig. 6 shows the plate of the fastener in side views and top view, with exemplary dimensions,
Fig. 7 shows the bolt of the fastener in top, side and bottom views, with exemplary dimensions,
Fig. 8 illustrates longitudinal cross-section of first embodiment of the fastener securing the substrate in concave region of the countermould, the latter being turned upside-down,
Fig. 9 shows longitudinal cross-section of second embodiment of the fastener applied in convex region of the countermould turned upside-down,
Fig. 10 presents longitudinal cross-section of first embodiment of the fastener applied in concave region of the countermould where a rib in the product is shaped between the mould and the coutermould; a sealing is applied on the fastener, the countermould (shown on Fig. 8) being turned back to working position,
Fig. 11 shows longitudinal cross-section of second embodiment of the fastener applied in convex region of the countermould facing concave region of the mould, the countermould (shown on Fig. 9) being here in working position on the mould, with the fastener sealed,
Fig. 12 and Fig. 13 present demoulding by lifting of the product fastened to the countermould, shown on Fig. 10 and Fig. 11, respectively,

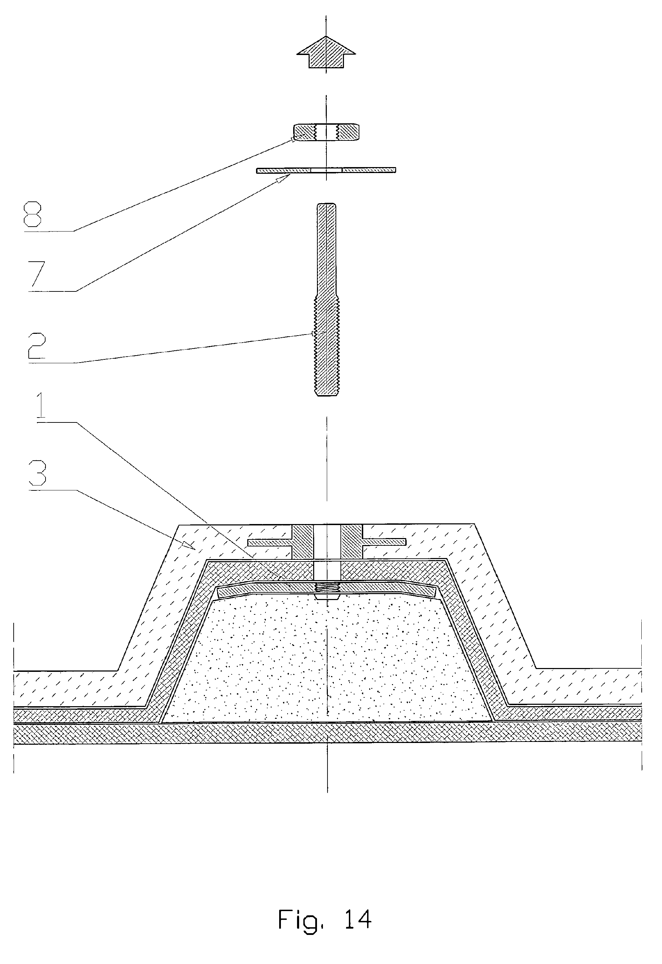

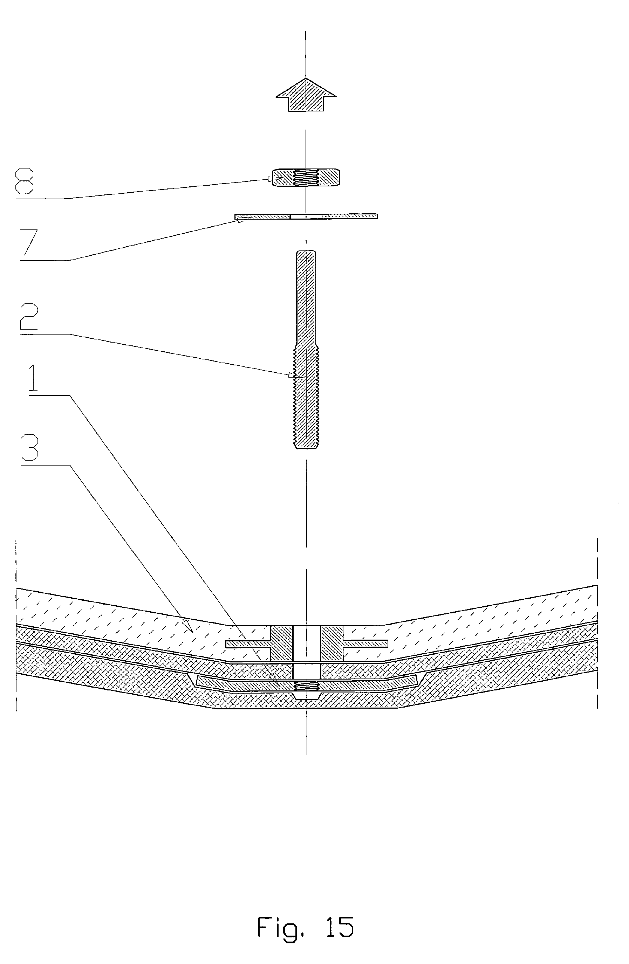

Fig. 14 and Fig. 15 show removing the nuts, washers and bolts from the product and the countermould, as shown on Fig. 10 and Fig. 11, respectively,

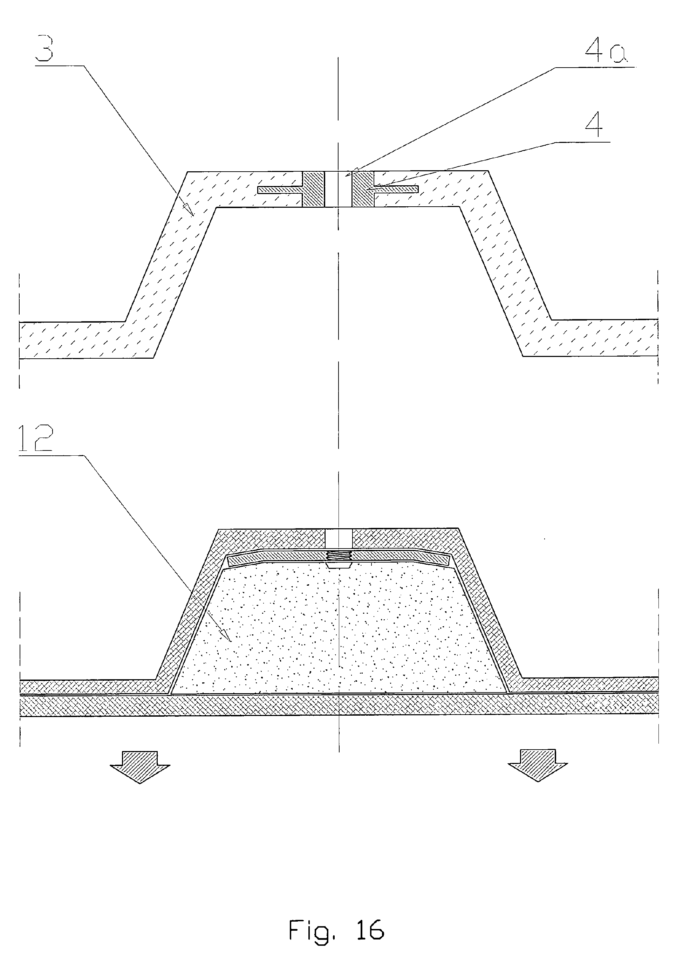

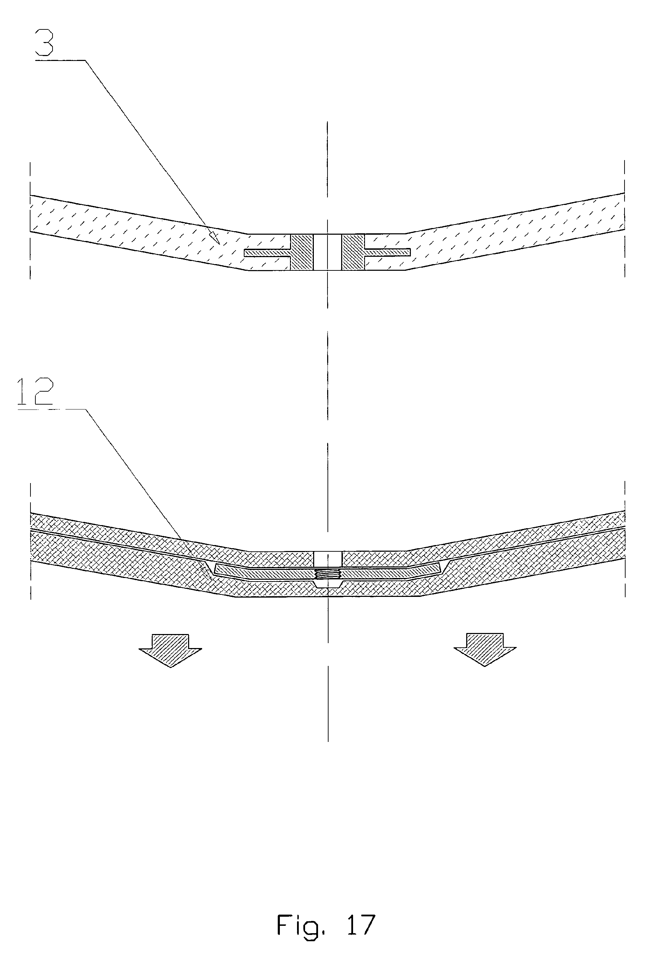

Fig. 16 and Fig. 17 illustrate demoulding of the product from the countermould shown on Fig. 10 and Fig. 11, respectively,
Fig. 18 shows the boat in top view, with indicated places where the plates of the fasteners remain in the hull,
Fig. 19 shows transverse cross-section of the boat furnished with the fuel tank secured to the hull by a fixing element screwed into the plate closed between the layers of the hull.

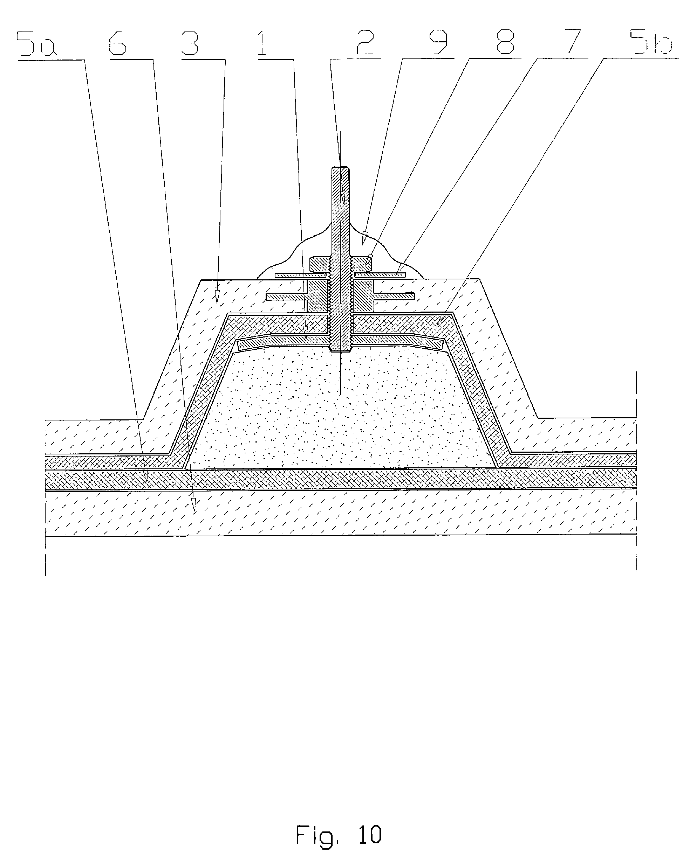

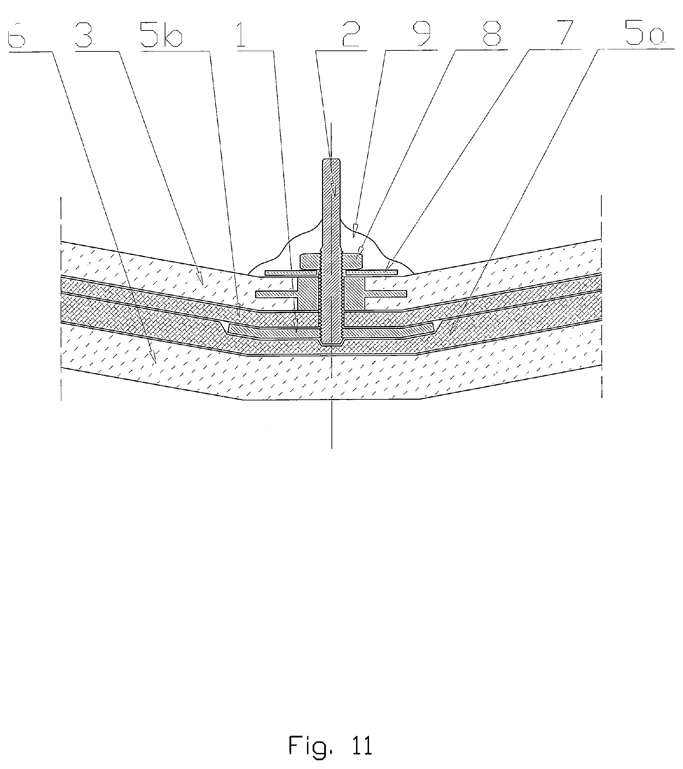

In preferred embodiment of the method of manufacture of a part of a boat by the substrate moulding, the part of a boat, e.g. the hull (12) is formed and cured between the mould (6) and the countermould (3) so that at least one layer (5) of the substrate is fastened to the countermould (3) with at least one fastener comprising the bolt (2) screwed on its first (2c) end into the threaded opening (1a) in the plate (1) placed between the layers (5a, 5b) of the substrate (cf. Fig. 10 and Fig. 11), whereas said bolt (2) is fastened to the countermould (3).

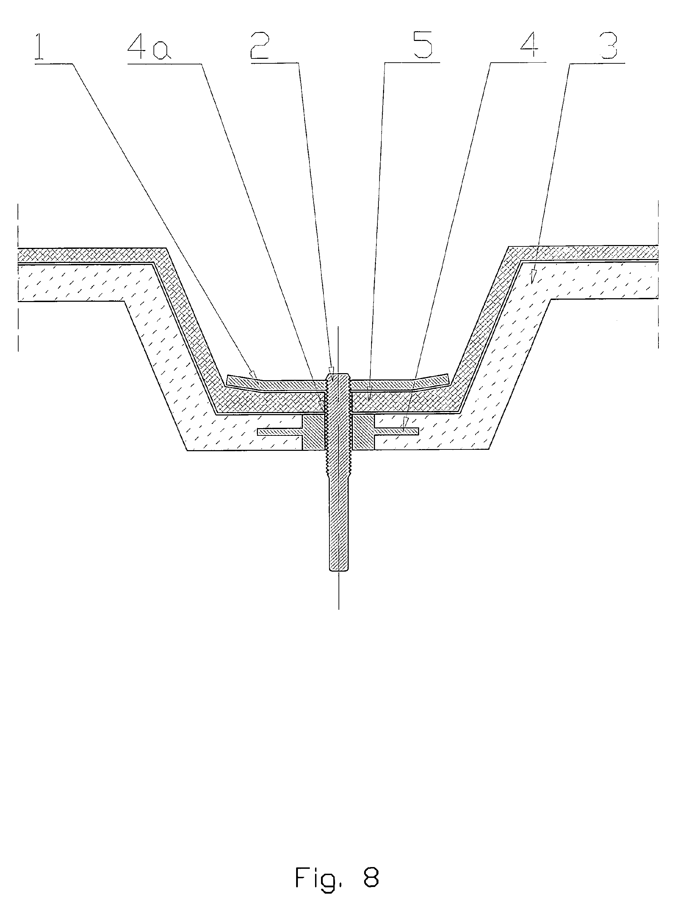

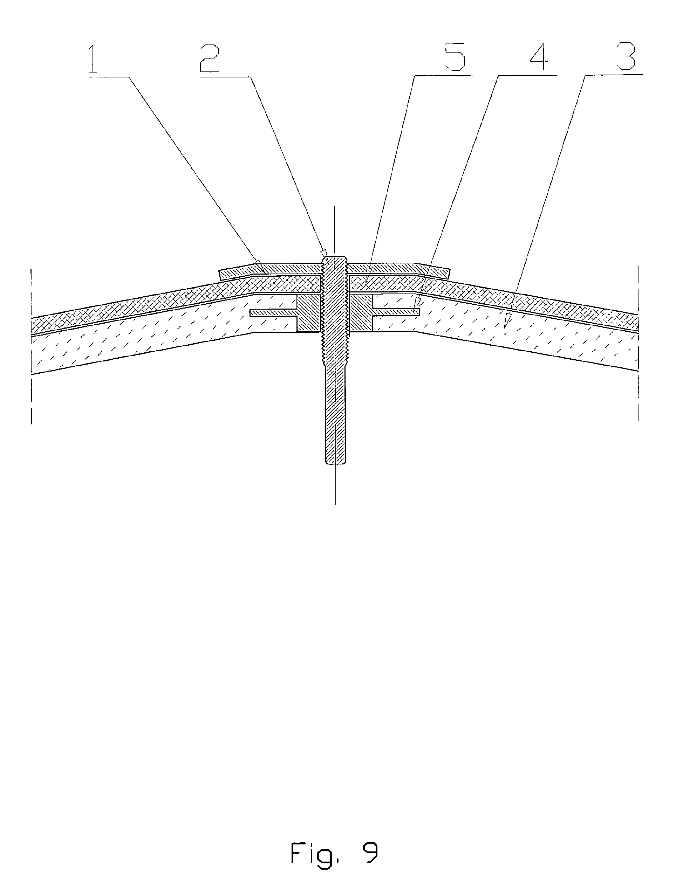

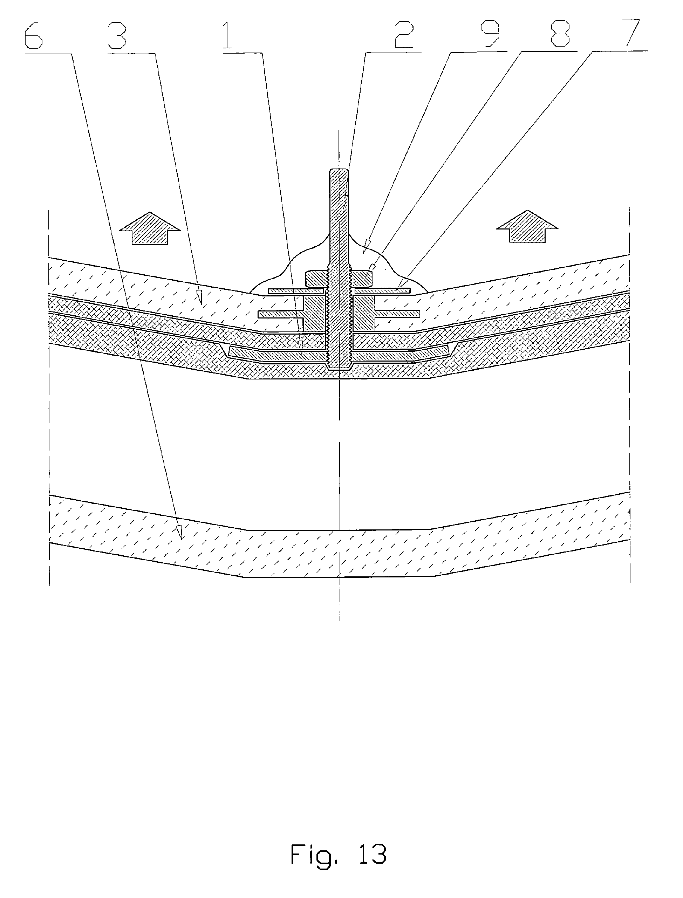

Advantageously at least one first layer (5a) of the substrate is applied on the working surface of the mould (6) and at least one second layer (5, 5b) of the substrate is applied on the working surface of the countermould (3) turned upside down (cf. Fig. 8 and Fig. 9). Then at least one plate (1) of the fastener is placed on said second layer (5, 5b) of the substrate so that the threaded opening (1a) in the plate (1) is facing respective orifice (4a) in the countermould (3). A hole in the second layer (5, 5b) between the threaded opening (1a) in the plate (1) and the orifice (4a) in the countermould (3) has to be made. Now the fastening bolts (2) are screwed on their first ends (2a), through the orifices (4a) in the countermould (3), into the threaded openings (1a) in the plates (cf. Fig. 8 to Fig. 13). The first end (2c) of each bolt (2) shall stick out from the plate (1) no more than 5 mm. Alternatively the bolts (2) may first be screwed into respective plates (1) and next put into the orifices (4a) in the countermould (3) from the side of the second layer (5, 5b).

Hereafter the washers (7), preferably the spring washers, are put on the second ends (2d) of the bolts (2), and the nuts (8) are screwed on threaded parts (2a) of the bolts (2) to stabilize the substrate upon the countermould (3). When the substrate is properly fastened to the countermould (3), the second parts (2b) of the bolts (2) together with the washers (7) and the nuts (8) are sealed (cf. Fig. 10 to Fig. 13), preferably with a sealing paste or a sealing tape (9), e.g. with isobutyl tape. Finally, the countermould (3) is turned back to working position and placed on the mould (6) covered with first layer (5a) of the substrate, and the part of a boat is formed and cured (cf. Fig. 10 and 11).

According to the method it is recommended that the part of a boat is formed and cured in decreased pressure and increased temperature. After the process of forming and curing of the part of a boat is completed, the countermould (3) is removed from the mould (6) together with the part of a boat fastened to the countermould (3), and moved to the transporting trolley or up to 5 cm above it. There the part of a boat is released from the countermould (3) by removing the bolts (2) from the countermould (3) and from the threaded openings (1a) in the plates (1).

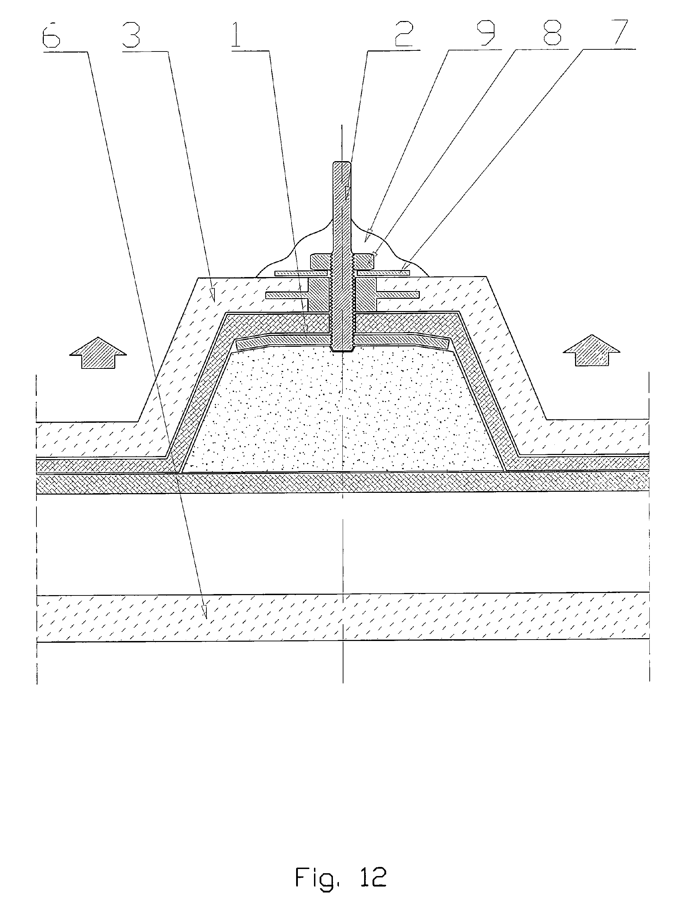

In preferred variant of the method the plate (1) is bent and it is placed with concave surface facing convex region (cf. Fig. 9 and Fig. 11) of the countermould (3), or it is placed with convex surface facing concave region (cf. Fig. 10 and Fig. 12) of the countermould (3).

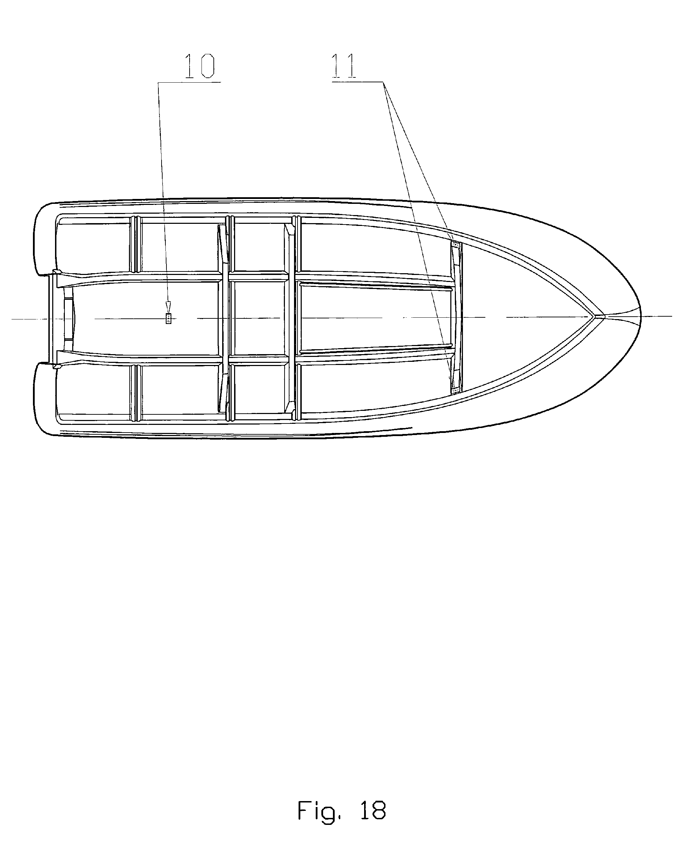

With the method claimed different objects can be manufactured, in particular a hull (12) of a boat (cf. Fig. 18).

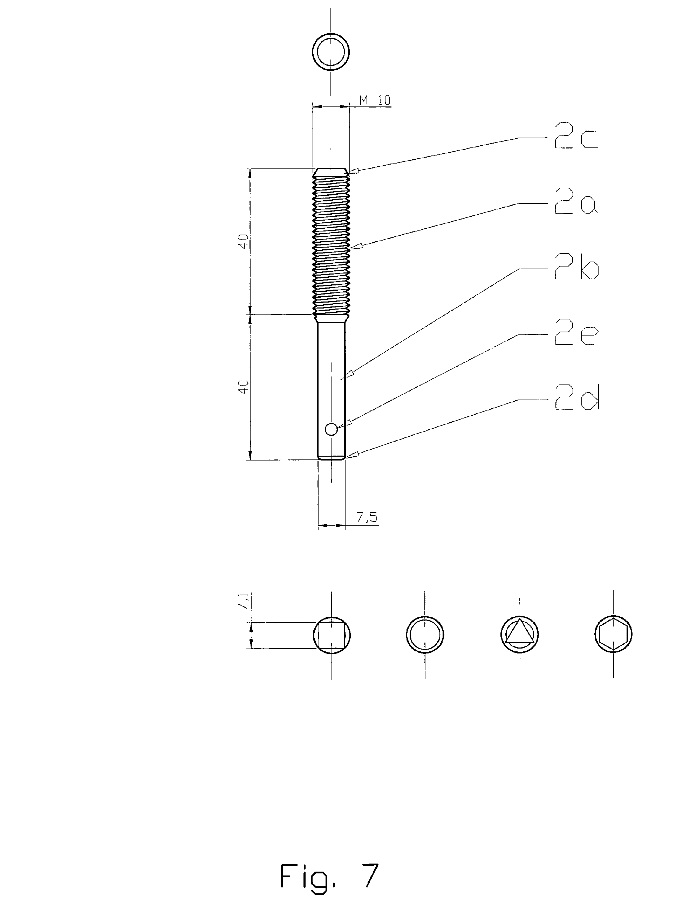

The fastener used in the method presented above comprises a plate (1) provided with a threaded opening (1a) and a bolt (2) provided on its first part (2a) with a thread fitting said threaded opening (1a) in the plate (1). The cross-section (2c) of first part (2a) of the bolt (2) is circular. On the other end, the cross-section (2d) of the second part (2b) of the bolt (2) may be triangular or square, or hexagonal, or elliptical, or circular (cf. Fig. 7).

This is convenient, in particular in regions with complicated geometry of the countermould (3), if the second part (2b) of the bolt (2) is provided with a hole (2e) crosswise to the axis of the bolt (2), for inserting of the levering rod. Alternatively, the second part (2b) of the bolt (2) is provided with two recesses (not shown) shaped on opposite sides of the bolt (2) and crosswise to the axis of the bolt for applying of the levering tool, e.g. flat wrench, adjustable spanner or pliers.

In strongly recommended embodiment the plate (1) of the fastener is bent, preferably two opposite end sections (1c) of the plate (1) are bent from the plane of central part (1b) of the plate (1) and make an angle towards this plane between 120 degrees and 175 degrees, advantageously 170 degrees.

If the plate (1) is facing concave region of the countermould (3), the bolt (2) is screwed into the convex surface of the plate. On the contrary, if the plate (1) is facing convex region of the countermould (3), the bolt (2) is screwed into the concave surface of the plate.

In preferred embodiment of the fastener, the bolt (2) is made from acid resistant steel and the plate (1) is made from aluminium sheet of thickness from 3 mm to 6 mm, advantageously 4 mm, or the plate (1) is made from acid resistant steel sheet of thickness from 2 mm to 4 mm, advantageously 3 mm.

For practical reasons it is recommended that the threaded opening (1c) in the plate (1) has a diameter from 6 mm (M6) to 16 mm (M16), advantageously 10 mm (M10) and the external diameter of the bolt (2) is comprised in a range from 6 mm (M6) to 16 mm (M 16), advantageously 10 mm (M10). Preferably its length is comprised in a range from 50 mm to 120 mm, advantageously 80 mm, and the bolt (2) is threaded on half of its length.

The countermould (3) used in claimed method is provided with at least one seat (4) for the bolt (2) of the fastener, said seat (4) having an orifice (4a) called a port adjusted with radial clearance to the diameter of the bolt of the fastener. This clearance enables easy manipulation of the bolt (2). Preferably, for the bolt diameter equal M10 the clearance is about 2 mm. The seat (4) itself has a collar on about half of its height. This collar holds the seat (4) within the shell of the countermould (3).

According to the invention, preferred embodiment of the part of a boat made with use of invented method contains at least one plate (1) of the fastener.

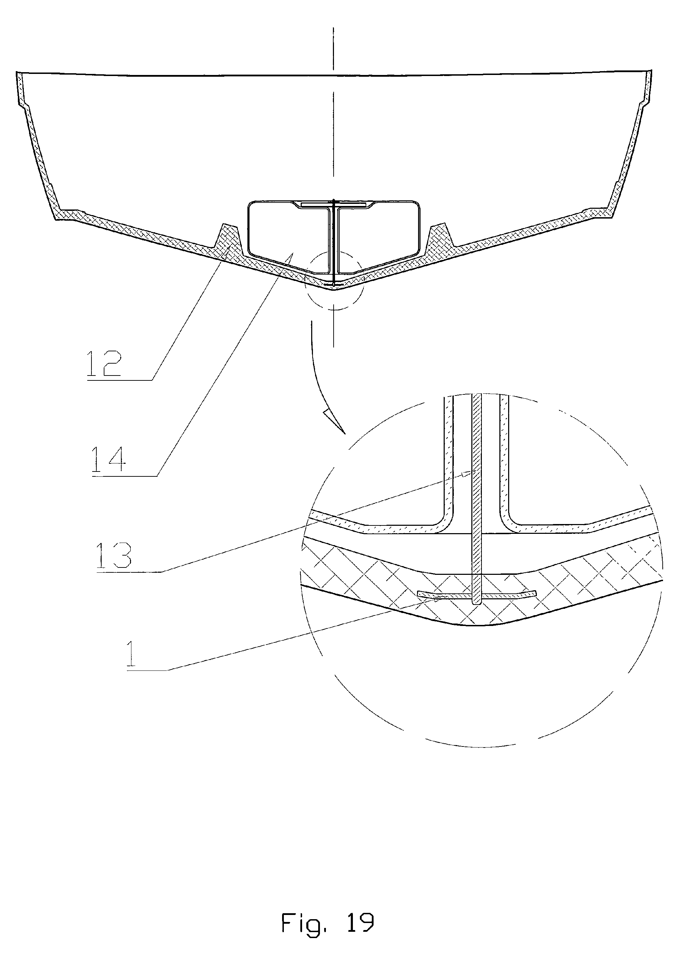

Advantageously the boat comprising at least one part of a boat, as described above, contains at least one piece of equipment like a fuel tank (14), fastened to at least one plate (cf. Fig. 19) with threaded bolt (13) of length adequate to respective dimension of this piece of equipment. For example this length may be close to the height of the fuel tank (14).

In mostly preferred embodiment the boat has three plates (1) closed within the hull (12): one plate in concave keel region (10) and two plates in convex side regions (11) of the hull (12). Three plates (cf. Fig. 18) are necessary to secure safely the mono-block hull (12) to the countermould (3).

## Claims

1. A method of manufacture of a part of a boat by the substrate moulding **characterised in that** the part of a boat is formed and cured between a mould and a countermould so that at least one layer of the substrate is fastened to the countermould with at least one fastener comprising the bolt screwed on its first end into the threaded opening in the plate placed between the layers of the substrate, whereas said bolt is fastened to the countermould.

2. The method according to claim 1 **characterised in that** at least one first layer of the substrate is applied on the working surface of the mould and at least one second layer of the substrate is applied on the working surface of the countermould turned upside down, then at least one plate of the fastener is placed on said second layer of the substrate so that the threaded opening in the plate is facing respective orifice in the countermould, then the fastening bolts are screwed on their first ends, through the orifices in the countermould, into the threaded openings in the plates, and the washers, preferably the spring washers, are put on the second ends of the bolts, and the nuts are screwed on threaded parts of the bolts to stabilize the substrate upon the countermould, then the second ends of the bolts together with the washers and the nuts are sealed, preferably with a sealing paste or a sealing tape, then the countermould is placed on the mould and the part of a boat is formed and cured.

3. The method according to claim 1 or 2 **characterised in that** the part of a boat is formed and cured in decreased pressure and increased temperature, then after the process of forming and curing of the part of a boat is completed, the countermould is removed from the mould together with the part of a boat fastened to the countermould, and moved to the transporting trolley, where the part of a boat is released from the countermould by removing the bolts from the countermould and from the threaded openings in the plates.

4. The method according to any of preceding claims **characterised in that** the plate is bent and it is placed with concave surface facing convex region of the countermould, or it is placed with convex surface facing concave region of the countermould.

5. The method according to any of preceding claims **characterised in that** the part of a boat is a hull or a part of the hull, a deck or a part of the deck, a bulkhead or a part of the bulkhead, a bow or a part of the bow, a stem or a part of the stem, or any other part that can be manufactured by moulding.

6. A fastener used in a method of manufacture of a part of a boat by the substrate moulding, as described in any of claims 1 to 5 **characterised in that** the fastener comprises a plate provided with a threaded opening and a bolt provided on its first end with a thread fitting said threaded opening in the plate, the cross-section of the second end of the bolt being triangular or square, or hexagonal, or elliptical, or circular.

7. The fastener according to claim 6 **characterised in that** the second end of the bolt is provided with a hole crosswise to the axis of the bolt, for inserting of the levering rod, or the second end of the bolt is provided with two recesses shaped on opposite sides of the bolt and crosswise to the axis of the bolt for applying of the levering tool.

8. The fastener according to claim 6 or 7 **characterised in that** the plate is bent, preferably two opposite end sections of the plate are bent from the plane of central part of the plate and make an angle towards this plane between 120 degrees and 175 degrees, advantageously 170 degrees.

9. The fastener according to claim 8 **characterised in that** the bolt is screwed into the convex surface of the plate.

10. The fastener according to claim 8 **characterised in that** the bolt is screwed into the concave surface of the plate.

11. The fastener according to any of claims 6 to 10 **characterised in that** the bolt is made from acid resistant steel and the plate is made from aluminium sheet of thickness from 3 mm to 6 mm, advantageously 4 mm, or the plate is made from acid resistant steel sheet of thickness from 2 mm to 4 mm, advantageously 3 mm.

12. The fastener according to any of claims 6 to 11 **characterised in that** the threaded opening in the plate has a diameter from 6 mm (M6) to 16 mm (M16), advantageously 10 mm (M10) and the external diameter of the bolt is comprised in a range from 6 mm (M6) to 16 mm (M16), advantageously 10 mm (M10), and its length is comprised in a range from 50 mm to 120 mm, advantageously 80 mm, and the bolt is threaded on half of its length.

13. A countermould used in a method of manufacture of a part of a boat by the substrate moulding, as described in any of claims 1 to 5 **characterised in that** the countermould is provided with at least one seat for the bolt of the fastener as described in any of claims 6 to 12, said seat having a port adjusted with radial clearance to the diameter of the bolt of the fastener.

14. A part of a boat made with use of a method of manufacture by the substrate moulding, as described in any of claims 1 to 5 **characterised in that** it contains at least one plate of the fastener described in any of claims 6 to 12.

15. A boat comprising at least one part of a boat as described in claim 14 **characterised in that** it contains at least one piece of equipment like a fuel tank, fastened to at least one plate of the fastener described in any of claims 6 to 12.
